(19) Europäisches Patentamt
European Patent Office
Office européen des brevets

(11) **EP 4 029 902 A1**

(12) **EUROPEAN PATENT APPLICATION**
published in accordance with Art. 153(4) EPC

(43) Date of publication:
**20.07.2022 Bulletin 2022/29**

(21) Application number: **20862372.8**

(22) Date of filing: **11.09.2020**

(51) International Patent Classification (IPC):
*C08J 3/12* (2006.01)        *C08L 67/04* (2006.01)
*C08L 77/00* (2006.01)        *B29B 11/14* (2006.01)

(52) Cooperative Patent Classification (CPC):
**B29B 11/14; C08J 3/12; C08L 67/04; C08L 77/00**

(86) International application number:
**PCT/KR2020/012291**

(87) International publication number:
**WO 2021/049901 (18.03.2021 Gazette 2021/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.09.2019 KR 20190112897**

(71) Applicant: **LX Hausys, Ltd.**
**Jung-gu
Seoul
04637 (KR)**

(72) Inventors:
• **LIM, Jae Ho**
**Seoul 07796 (KR)**

• **KANG, Sung Yong**
**Seoul 07796 (KR)**
• **KIM, Min Gyung**
**Seoul 07796 (KR)**
• **GO, Yu Jin**
**Seoul 07796 (KR)**
• **SONG, Jae Han**
**Seoul 07796 (KR)**
• **CHOI, Jun Ho**
**Seoul 07796 (KR)**
• **KONG, Hyo Jae**
**Seoul 07796 (KR)**
• **HWANG, Yun Hwan**
**Seoul 07796 (KR)**

(74) Representative: **Goddar, Heinz J.**
**Boehmert & Boehmert
Anwaltspartnerschaft mbB
Pettenkoferstrasse 22
80336 München (DE)**

(54) **THERMOPLASTIC POLYMER PARTICLES AND METHOD FOR PREPARING SAME**

(57)    The present invention relates to a method for preparing thermoplastic polymer particles, the method comprising the steps of: (1) extruding a thermoplastic polymer resin by means of an extruder; (2) granulating the extruded polymer resin by using an inert gas; and (3) cooling the granulated thermoplastic polymer resin, and thermoplastic polymer particles prepared thereby.

【Figure 4】

EP 4 029 902 A1

**Description**

[Technical Field]

The present application claims the benefit of priority based on Korean Patent Application No. 10-2019-0112897 filed on September 11, 2019, the entire contents of which are incorporated herein by reference.
The present invention relates to thermoplastic polymer particles and a method for preparing the same.

[Background Art]

Polymer resin in the form of particles is used in various ways throughout the industry. These polymer resin particles are prepared through the process of granulating the raw material of the polymer resin.
In general, as a method of granulating the thermoplastic polymer resin, there are a pulverization method represented by freeze pulverization; a solvent dissolution precipitation method precipitating by dissolving in a high-temperature solvent and then cooling, or precipitating by dissolving in a solvent and then adding a bad solvent; and a melt-kneading method to obtain thermoplastic resin particles by mixing a thermoplastic resin and an incompatible resin in a mixer to form a composition having a thermoplastic resin in the dispersed phase and an incompatible resin in a continuous phase, and then removing the incompatible resin.
When the particles are prepared through the pulverization method, there is a problem that it is difficult to secure the particle uniformity of the prepared thermoplastic polymer resin particles. In addition, since liquid nitrogen is used during cooling of the pulverization method, a high cost is required compared to the particle obtaining process. If the compounding process of adding pigments, antioxidants, etc. to the raw material of thermoplastic polymer resin is added, since it is proceeded in a batch type, productivity is lowered compared to the continuous particle obtaining process. If the particles are prepared through the solvent dissolution precipitation method and the melt-kneading method, there is a problem that other components such as a solvent in addition to the thermoplastic resin particles may be detected as impurities. If the impurities are mixed during processing, it is difficult to produce particles made of pure thermoplastic polymer resin, as well as there is a high risk of causing deformation of the physical properties and shape of the particles, and also it is difficult to finely control them.
Due to the above-mentioned problems, it is not possible to prepare thermoplastic polymer resin particles having physical properties suitable for application to products by conventional methods. Accordingly, there is a need in the art for thermoplastic polymer resin particles with improved physical properties by improving conventional methods.

[Prior Art Document]

(Patent Document 1) Japanese Laid-open Patent Publication No. 2001-288273
(Patent Document 2) Japanese Laid-open Patent Publication No. 2000-007789
(Patent Document 3) Japanese Laid-open Patent Publication No. 2004-269865

[Disclosure]

[Technical Problem]

The present invention is to provide thermoplastic polymer particles that have a small particle diameter and do not have a wide range of particle size distribution, molecular weight distribution, and color difference by using a new preparation process.

[Technical Solution]

The present invention provides a method for preparing thermoplastic polymer particles comprising the steps of (1) extruding a thermoplastic polymer resin through an extruder; (2) granulating the extruded polymer resin with inert gas; and (3) cooling the granulated thermoplastic polymer resin.
In addition, the present invention provides polypropylene particles formed in a continuous matrix phase, wherein the weight average molecular weight (Mw) of the particles is 40,000 to 70,000 g/mol.
In addition, the present invention provides thermoplastic polyurethane particles formed in a continuous matrix phase, wherein the weight average molecular weight (Mw) of the particles is 50,000 to 80,000 g/mol.
In addition, the present invention provides polylactic acid particles formed in a continuous matrix phase, wherein the weight average molecular weight (Mw) of the particles is 35,000 to 60,000 g/mol.

In addition, the present invention provides polyamide particles formed in a continuous matrix phase, wherein the weight average molecular weight (Mw) of the particles is 50,000 to 65,000 g/mol.

In addition, the present invention provides polyether sulfone particles formed in a continuous matrix phase, wherein the weight average molecular weight (Mw) of the particles is 35,000 to 50,000 g/mol.

In addition, the present invention provides polypropylene particles formed in a continuous matrix phase and having a b* value of the particles of 1.0 or less.

In addition, the present invention provides thermoplastic polyurethane particles formed in a continuous matrix phase and having a b* value of the particles of 10.0 or less.

In addition, the present invention provides polylactic acid particles formed in a continuous matrix phase and having a b* value of the particles of 8.0 or less.

In addition, the present invention provides polyamide particles formed in a continuous matrix phase and having a b* value of the particles of 12.0 or less.

In addition, the present invention provides polyether sulfone particles formed in a continuous matrix phase and having a b* value of the particles of 10.0 or less.

[Advantageous Effects]

The thermoplastic polymer particles according to the present invention have a small average particle diameter and do not have a wide range of particle size distribution, molecular weight distribution, and color difference, so they can be applied to powder-type cosmetics that require flowability, thereby maximizing cosmetic effects such as spreadability, or since the thermoplastic polymer particles according to the present invention do not have a wide particle size distribution, when mixed with an inorganic material, etc. they can perform the role of a binder well by appropriately filling the voids between inorganic materials to maximize the function of the composite.

[Description of Drawings]

FIG. 1 is an image schematically showing the shape of the thermoplastic polymer particles of the present invention.
FIG. 2 is a process flow chart schematically illustrating a method for manufacturing thermoplastic polymer particles according to the present invention.
FIG. 3 is a cross-sectional view of the nozzle discharge portion showing the supply positions of the thermoplastic polymer resin and air in the nozzle according to an embodiment of the present invention.
FIG. 4 is a schematic diagram specifically showing the supply position of air in the nozzle according to an embodiment of the present invention.

[Best Mode]

The embodiments provided according to the present invention can all be achieved by the following description. It is to be understood that the following description describes preferred embodiments of the present invention. and it should be understood that the present invention is not necessarily limited thereto.

With respect to the numerical range used in the following specification, the expression "to" is used to include both the upper and lower limits of the range, and in the case of not including the upper or lower limits, expressions of "less than", "greater than", "or less", or "or more" are used to specifically indicate whether or not the upper or lower limits are included.

The present invention provides thermoplastic polymer particles, which could not be obtained by a conventional method for preparing particles, and a method for preparing the same. Hereinafter, the thermoplastic polymer particles according to the present invention will be described in detail.

**Thermoplastic polymer particle**

The present invention provides thermoplastic polymer particles prepared by extruding a thermoplastic polymer resin and then contacting it with air, and thus atomizing it.

The method for producing thermoplastic polymer particles according to the present invention is an improved method compared to the conventional pulverization method, solvent dissolution precipitation method, and melt kneading method. A specific preparation method will be described in the "Method for preparing thermoplastic polymer particle" section below.

The thermoplastic polymer resin used in the present invention can be used without particular limitation as long as it is a polymer resin having a thermoplastic, and preferably polypropylene, thermoplastic polyurethane, polylactic acid, polyamide, polyether sulfone, etc. can be used.

The thermoplastic polymer particles according to the present invention have a value of 90% cumulative volume particle diameter ($D_{90}$) of 25 to 30 $\mu$m smaller than the thermoplastic polymer particles prepared by the conventional method. The thermoplastic polymer particles according to the present invention specifically have a value of 90% cumulative volume particle diameter ($D_{90}$) of about 80 to 130 $\mu$m.

Specifically, when the thermoplastic polymer is polypropylene, the particle diameter ($D_{90}$) of the particles may be 80 to 105 $\mu$m, preferably 85 to 100 $\mu$m, and most preferably 85 to 95 $\mu$m.

In addition, when the thermoplastic polymer is thermoplastic polyurethane, the particle diameter ($D_{90}$) of the particles may be 80 to 110 $\mu$m, preferably 85 to 105 $\mu$m, and most preferably 95 to 100 $\mu$m.

In addition, when the thermoplastic polymer is polylactic acid, the particle diameter ($D_{90}$) of the particles may be 20 to 40 $\mu$m, preferably 25 to 35 $\mu$m, and most preferably 25 to 30 $\mu$m.

In addition, when the thermoplastic polymer is polyamide, the particle diameter ($D_{90}$) of the particles may be 80 to 115 $\mu$m, preferably 85 to 110 $\mu$m, and most preferably 95 to 105 $\mu$m.

In addition, when the thermoplastic polymer is polyether sulfone, the particle diameter ($D_{90}$) of the particles may be 80 to 130 $\mu$m, preferably 90 to 125 $\mu$m, and most preferably 100 to 120 $\mu$m.

In addition, since the thermoplastic polymer particles according to the present invention have a small particle-size distribution and small particle diameter deviation, they have the advantage of good mixing and increased mechanical strength when applied to products. In the present specification, the particle size distribution of the thermoplastic polymer particles was measured by a wet method using a particle size analyzer (Microtrac company, S3500), and the specific method thereof is described in the Example below. Here, $D_{10}$, $D_{50}$, and $D_{90}$ mean the particle diameter corresponding to 10%, 50%, and 90% of the cumulative volume percentage in the cumulative volume distribution of particles, respectively.

With regard to the particle size distribution of the thermoplastic polymer particles, the thermoplastic polymer particles according to the invention have a D value of 5 to 20, more specifically 7 to 18. Specifically, in the case of polypropylene, it has a D value of 10 to 20, preferably 13 to 18, in the case of thermoplastic polyurethane, it has a D value of 5 to 12, preferably 7 to 10, in the case of polylactic acid, it has a D value of 6 to 13, preferably 8 to 11, in the case of polyamide, it has a D value of 7 to 15, preferably 8 to 14, and in the case of polyether sulfone, it has a D value of 5 to 12, preferably 7 to 10. At this time, the D value is calculated by the following Calculation Formula A:

[Calculation Formula A]

$$D = \left(\frac{D_{90}}{D_{50}}\right)^2 + \left(\frac{D_{50}}{D_{10}}\right)^2$$

The D value is a numerical value where particles having a larger 90% cumulative volume particle diameter ($D_{90}$) and particles having a smaller 10% cumulative volume particle diameter ($D_{10}$) are located on the basis of the particles having an average particle diameter ($D_{50}$). Here, the particles with relatively large particle diameter serve to support the particles with average particle diameter when applied together with the particles with average particle diameter, and the particles with relatively small particle diameter serve to fill the voids between the particles with average particle diameter when applied together with the particles with average particle diameter. As the D value is smaller, the particle diameter of the particles is distributed closer to the average particle diameter, and as the D value is larger, the particle diameter of the particles is distributed farther from the average particle diameter. The D value is small, the proportion of particles having a diameter close to the average particle diameter is increased, so it is difficult to obtain an effect from the variability in the size of the particles. On the other hand, if the value of D is large, the proportion of particles having a diameter far from the average particle diameter is increased, so it is difficult to o calculate and apply a standard particle size. When the particles satisfy the D value in the above-mentioned range, large particles and small particles are distributed in an appropriate ratio around the average particle diameter, thereby exhibiting excellent physical properties when applied to actual products.

In the present invention, the shape of the particles is evaluated in the following aspect ratio and roundness. As the aspect ratio and roundness are closer to 1, the shape of the particles is interpreted as being closer to a spherical shape. The aspect ratio is calculated by the following Calculation Formula 1:

[Calculation Formula 1]

Aspect ratio = Major axis/Minor axis.

In addition, the roundness is calculated by the following Calculation Formula 2:

[Calculation Formula 2]

Roundness = 4 × Area/(π × Major axis^2)

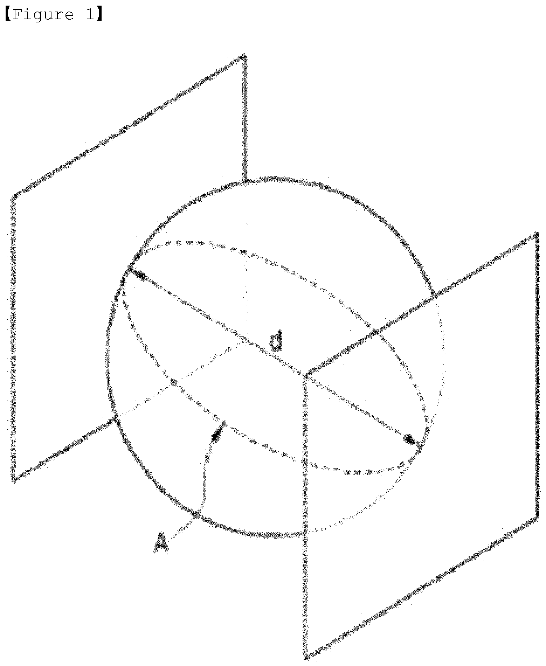

In order to describe the Calculation Formula in detail, FIG. 1 schematically depicting the thermoplastic polymer particles is provided. According to FIG. 1, the "major axis" in Calculation Formulas 1 and 2 means the longest distance among the vertical distances (d) between two parallel tangents of the 2D image (cross-section) of the thermoplastic polymer particles, and the "minor axis" means the shortest distance among the vertical distances (d) between two parallel tangents of the 2D image (cross-section) of the thermoplastic polymer particles. In addition, the "area" in the calculation formula 3 means a cross sectional area including the major axis of the thermoplastic polymer particles. FIG. 1 illustrates an area (A) as an example when the vertical distance (d) between two parallel tangent planes of the thermoplastic polymer particles is a major axis.

According to one embodiment of the present invention, the thermoplastic polymer particles according to the present invention may have an aspect ratio of 1.00 or more and less than 1.05, more specifically, 1.02 or more and less than 1.05, and may have a roundness of 0.95 to 1.00, more specifically, 0.98 to 1.00. If the shape of the thermoplastic polymer particles satisfies the above-mentioned aspect ratio and roundness ranges, the flowability and uniformity of the thermoplastic polymer particles are increased, so that when applied to a bipolar plate, etc., it is easy to handle the particles, and the bipolar plate to which the particles are applied can have improved quality due to the excellent flowability and dispersibility of the particles.

The numerical values according to the Calculation Formulas 1 and 2 can be measured by image processing - after converting to a binary image, the degree of spheroidization of individual particles is quantified - the image of the thermoplastic polymer particles using ImageJ (National Institutes of Health: NIH).

The thermoplastic polymer particles according to the present invention are particles obtained by forming a continuous matrix from a thermoplastic polymer resin. Forming the continuous matrix phase from the thermoplastic polymer resin means forming a continuously close-packed structure of the thermoplastic polymer resin without additional components. By extruding and melting a thermoplastic polymer resin and then granulating the melt with air, thermoplastic polymer particles are continuously produced with a close-packed structure. On the contrary, according to the conventional preparation method, since the particles are formed by adding an additional component or the particles are formed through a discontinuous process of cooling and grinding, the particles with a continuous matrix phase are not formed.

The particles obtained by forming a continuous matrix phase from thermoplastic polymer resin basically have high purity because an impurity is not mixed in the preparation process of the particles. As used herein, the term "impurity" refers to a component other than the thermoplastic polymer, which may be incorporated in the preparation of the particles. Exemplary impurities may be a solvent for dispersing the thermoplastic polymer resin, a heavy metal component included in the pulverization or grinding process, and an unreacted monomer included in the polymerization process. According to one embodiment of the present invention, the impurity content of the thermoplastic polymer particles of the present invention may be 50 ppm or less, preferably 20 ppm or less, more preferably 5 ppm or less.

In addition, the particles may additionally have other properties as well as purity. As one of these properties, the thermoplastic polymer particles exhibit a peak of a cold crystallization temperature ($T_{cc}$) at a temperature between a glass transition temperature ($T_g$) and a melting location point (Tm) in the DSC curve derived by analysis according to the temperature increase of 10 °C/min by the differential scanning calorimetry (DSC). The thermoplastic polymer particles are spherical solid particles at room temperature. When these particles are analyzed at elevated temperature using the differential scanning calorimetry, as the temperature is raised, the fluidity is gradually increased. At this time, the thermoplastic polymer particles exhibit a peak of a cold crystallization temperature ($T_{cc}$) at a temperature between a glass transition temperature ($T_g$) and a melting location point ($T_m$), which means that the thermoplastic polymer particles have exothermic properties before they are melted. According to one embodiment of the present invention, the cold crystallization temperature ($T_{cc}$) appears in a section in the range of 30% to 70% between the glass transition temperature ($T_g$) and the melting location point ($T_m$). In the above section, 0% is the glass transition temperature ($T_g$), and 100% is the melting location point ($T_m$). In addition, according to the DSC curve, the thermoplastic polymer particles may have a difference value (ΔH1-ΔH2) of an endothermic value (ΔH1) and a calorific value (ΔH2) of 3 to 100J/g. Due to these characteristics, when the thermoplastic polymer particles are used in a heating process, it is possible to obtain the advantage of being able to process at a low temperature compared to the processing temperature of the same type of thermoplastic polymer particles.

The thermoplastic polymer particles of the present invention have a degree of compressibility similar to that of the conventional thermoplastic polymer particles. The degree of compressibility may be calculated by the following Calculation Formula 3, and according to one embodiment of the present invention, the thermoplastic polymer particles have a degree of compressibility of 10 to 20%.

$$[Calculation\ Formula\ 3]$$

$$Degree\ of\ compressibility\ =\ (P-R)/P \times 100$$

In Calculation Formula 3, P means compressed bulk density, and R means relaxed bulk density.

As described above, since the thermoplastic polymer particles according to the present invention have good flowability, the voids between the particles can be well filled, and accordingly, a degree of compressibility of a certain level or more is maintained. The degree of compressibility of the thermoplastic polymer particles can affect the quality of a product when preparing the product through the particles. As in the present invention, when thermoplastic polymer particles having a degree of compression greater than or equal to a certain degree are used, the molded article may have an effect of minimizing voids that may occur in the article. According to one embodiment of the present invention, the thermoplastic polymer particles have a compressed bulk density of 0.20 to 0.6 g/cm$^3$.

Specifically, when the thermoplastic polymer is polypropylene, the compressed bulk density of the particles may be 0.3 to 0.6 g/cm$^3$, preferably 0.4 to 0.5 g/cm$^3$.

In addition, when the thermoplastic polymer is thermoplastic polyurethane, the compressed bulk density of the particles may be 0.3 to 0.5 g/cm$^3$, preferably 0.35 to 0.45 g/cm$^3$.

In addition, when the thermoplastic polymer is polylactic acid, the compressed bulk density of the particles may be 0.2 to 0.4 g/cm$^3$, preferably 0.25 to 0.3 g/cm$^3$.

In addition, when the thermoplastic polymer is polyamide, the compressed bulk density of the particles may be 0.3 to 0.6 g/cm$^3$, preferably 0.45 to 0.55 g/cm$^3$.

In addition, when the thermoplastic polymer is polyether sulfone, the compressed bulk density of the particles may be 0.4 to 0.6 g/cm$^3$, preferably 0.45 to 0.55 g/cm$^3$.

In addition, specifically, when the thermoplastic polymer is polypropylene, the weight average molecular weight (Mw) of the particles may be 40,000 to 70,000 g/mol, preferably 52,000 to 70,000 g/mol.

In addition, when the thermoplastic polymer is a thermoplastic polyurethane, the weight average molecular weight (Mw) of the particles may be 50,000 to 80,000 g/mol, preferably 58,000 to 80,000 g/mol.

In addition, when the thermoplastic polymer is polylactic acid, the weight average molecular weight (Mw) of the particles may be 35,000 to 60,000 g/mol, preferably 40,000 to 60,000 g/mol.

In addition, when the thermoplastic polymer is polyamide, the weight average molecular weight (Mw) of the particles may be 50,000 to 65,000 g/mol, preferably 55,000 to 65,000 g/mol.

In addition, when the thermoplastic polymer is polyether sulfone, the weight average molecular weight (Mw) of the particles may be 35,000 to 50,000 g/mol, preferably 39,000 to 50,000 g/mol.

In addition, specifically, specifically, when the thermoplastic polymer is polypropylene, the b* value of the particles may be 1.0 or less, preferably -0.40 or less, and in this case, the lower limit of the b* value may be -2.0 or more.

In addition, when the thermoplastic polymer is thermoplastic polyurethane, the b* value of the particles may be 10.0 or less, preferably 5.60 or less, and in this case, the lower limit of the b* value may be -1.0 or more.

In addition, when the thermoplastic polymer is polylactic acid, the b* value of the particles may be 8.0 or less, preferably 5.25 or less, and in this case, the lower limit of the b* value may be 2.0 or more.

In addition, when the thermoplastic polymer is polyamide, the b* value of the particles may be 12.0 or less, preferably 6.60 or less, and in this case, the lower limit of the b* value may be 3.0 or more.

In addition, when the thermoplastic polymer is polyether sulfone, the b* value of the particles may be 10.0 or less, preferably 5.85 or less, and in this case, the lower limit of the b* value may be 2.5 or more.

The thermoplastic polymer particles according to the present invention have a travel time of 20 to 30 seconds. The travel time is a numerical value indicating the fluidity of the powder. The short travel time means that the frictional resistance between the particles is small, and if the frictional resistance between the particles is small, it is easy to handle the particles. Since the thermoplastic polymer particles according to the present invention have a shorter travel time compared to the conventional thermoplastic polymer particles, they have good fluidity and are easy to handle.

The thermoplastic polymer particles according to the present invention have a crystallinity of 5 to 10%. The crystallinity of the thermoplastic polymer particles is lower than that of the large-diameter particles in the form of pellets, and the thermoplastic polymer particles according to the present invention are easy to process due to the low crystallinity.

The thermoplastic polymer particles having the above-described characteristics are prepared by the following preparation method. Hereinafter, a method for preparing the thermoplastic polymer particles according to the present invention will be described in detail.

**Preparation method of thermoplastic polymer particle**

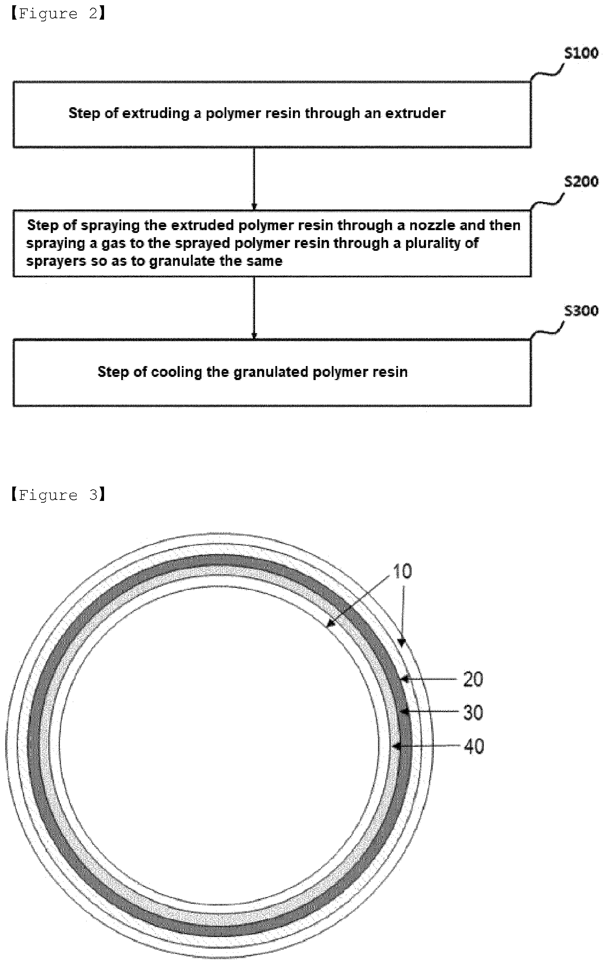

FIG. 2 schematically shows a process flow chart for the preparation method. The preparation method comprises a step of extruding a thermoplastic polymer resin through an extruder (S100); a step of spraying the extruded thermoplastic polymer resin through a nozzle and then spraying a gas to the sprayed thermoplastic polymer resin through a plurality of sprayers to granulate it (S200); and a step of cooling the granulated thermoplastic polymer resin (S300). In addition, it may further comprise the step of collecting the cooled thermoplastic polymer particles. In addition, between the (S100) step and the (S200) step, a step of passing the extruded thermoplastic polymer through a mesh screen may be further included. Hereinafter, each step of the preparation method will be described in detail.

(1) Step of extruding thermoplastic polymer resin through extruder

In order to manufacture the thermoplastic polymer particles according to the present invention, first, the raw material, thermoplastic polymer resin, is supplied to an extruder and extruded.

The thermoplastic polymer resin used in the present invention can be used without particular limitation as long as it is a polymer resin having a thermoplastic, and preferably polypropylene, thermoplastic polyurethane, polylactic acid, polyamide, polyether sulfone, etc. can be used.

By extruding the thermoplastic polymer resin, the thermoplastic polymer resin has properties suitable for the processing of particles in the nozzle. The thermoplastic polymer resin used as a raw material may preferably have a weight average molecular weight (Mw) of 10,000 to 200,000 g/mol in consideration of appropriate physical properties of the prepared particles.

The extruder to which the thermoplastic polymer resin is supplied heats and pressurizes the thermoplastic polymer resin to control physical properties such as viscosity of the thermoplastic polymer resin. The type of the extruder is not particularly limited as long as it can adjust to the physical properties suitable for granulation in the nozzle. According to one embodiment of the present invention, a twin screw extruder may be used as the extruder for efficient extrusion. Although the inside of the extruder varies depending on the type of thermoplastic polymer used, it may be desirable to maintain the temperature of the entire extruder at a temperature of 140 to 420°C. If the internal temperature of the extruder is too low, not only the viscosity of the thermoplastic polymer resin is high, so it is not suitable for granulation in the nozzle, but also the flowability of the thermoplastic polymer resin in the extruder is low, so it is not efficient for extrusion. In addition, if the internal temperature of the extruder is too high, the flowability of thermoplastic polymer resin is high and thus efficient extrusion is possible, but it is difficult to fine-tune the physical properties when the thermoplastic polymer resin is granulated in the nozzle.

However, in the preparation method of the thermoplastic polymer particles of the present invention, by adjusting the temperature profile of the extruder, and by controlling, the amount of heat received by the thermoplastic polymer resin in the extruder, the position from the fore-end of the extruder where the thermoplastic resin is fed into the extruder to the distal end where the thermoplastic resin is discharging from the extruder, and the temperature of each position, the physical properties of the finally prepared thermoplastic polymer particles can be controlled, and in particular, the size of particle-size distribution can be controlled.

Specifically, when the thermoplastic polymer resin is polypropylene, the extruder temperature from the fore-end of the extruder to the 2/10 location point based on the resin flow direction is raised from 140 °C to 150 °C, the extruder temperature from the 2/10 location point to the 7/10 location point is raised from 150 °C to 200 °C, and the extruder temperature from the 7/10 location point to the distal end is raised from 200 °C to 225 °C.

In addition, when the thermoplastic polymer resin is thermoplastic polyurethane, the extruder temperature from the fore-end of the extruder to the 2/10 location point based on the resin flow direction is raised from 160 °C to 170 °C, the extruder temperature from the 2/10 location point to the 7/10 location point is raised from 170 °C to 210 °C, and the extruder temperature from the 7/10 location point to the distal end is raised from 210 °C to 220 °C.

In addition, when the thermoplastic polymer resin is polylactic acid, the extruder temperature from the fore-end of the extruder to the 2/10 location point based on the resin flow direction is raised from 150 °C to 160 °C, the extruder temperature from the 2/10 location point to the 7/10 location point is raised from 160 °C to 190 °C, and the extruder temperature from the 7/10 location point to the distal end is raised from 190 °C to 200 °C.

In addition, when the thermoplastic polymer resin is polyamide, the extruder temperature from the fore-end of the extruder to the 2/10 location point based on the resin flow direction is raised from 240 °C to 250 °C, the extruder temperature from the 2/10 location point to the 7/10 location point is raised from 250 °C to 300 °C, and the extruder temperature from the 7/10 location point to the distal end is raised from 300 °C to 320 °C.

In addition, when the thermoplastic polymer resin is polyether sulfone, the extruder temperature from the fore-end of the extruder to the 2/10 location point based on the resin flow direction is raised from 370 °C to 380 °C, the extruder temperature from the 2/10 location point to the 7/10 location point is raised from 380 °C to 400 °C, and the extruder temperature from the 7/10 location point to the distal end is raised from 400 °C to 420 °C.

The extrusion amount of the thermoplastic polymer resin can be easily set to control the physical properties of the thermoplastic polymer resin in consideration of the size of the extruder. According to one embodiment of the present invention, the thermoplastic polymer resin is extruded at a rate of 1 to 20 kg/hr. The viscosity of the extruded thermoplastic polymer resin varies depending on each type of the thermoplastic resin, but overall, it may have a range of 0.5 to 25 Pa·s. If the viscosity of the thermoplastic polymer resin is less than 0.5 Pa·s, it is difficult to process the particles in the nozzle. If the viscosity of the thermoplastic polymer resin exceeds 25 Pa·s, the flowability of the thermoplastic polymer resin in the nozzle is low and thus the processing efficiency is reduced. The temperature of the extruded thermoplastic polymer resin may be 150 to 420 °C. When extruding the thermoplastic polymer resin through the extruder, an inert gas can be injected into the extruder. In the present invention, the inert gas may be gases such as nitrogen, helium, argon, neon, and the like. At this time, the inert gas is injected into the start portion of the extruder and comes out from the end portion of the extruder. In addition, the inert gas may be injected at a flow rate of 4 to 64 L/min. If the flow rate of the inert gas is less than 4 L/min, there is a problem that the barrel atmosphere inside the extruder cannot be completely replaced with the inert gas, and oxygen is locally present so that the polymer extrudate is oxidized, thereby reducing the molecular weight and mechanical properties of the final product, polymer particles. If the flow rate of the inert gas exceeds the flow rate of 64L/min, there is a problem that bubbles are redundantly included in the polymer extrudate, and thus the polymer extrudate is not continuously supplied to the nozzle, the final product, the polymer particles, is not continuously prepared. In the case of using the inert gases as described above in the preparation method of the polymer particles of the present invention, there is an advantage that it prevents the polymer resin from being oxidized in the extruder and minimizes the decrease in molecular weight and mechanical and physical properties of the final product, polymer particles.

After the step of extruding the thermoplastic polymer resin through the extruder, the extruded thermoplastic polymer can be passed through the mesh screen. The mesh screen may have a mesh of 60 to 100. If the extruded thermoplastic polymer is passed through the mesh screen, since the polymer is evenly gelled, the deviation of the particle diameter can be reduced, and it can be prevented from widening the particle-size distribution.

(2) Step of granulating the extruded polymer resin with inert gas

The preparation method of the thermoplastic polymer particles of the present invention supplies the thermoplastic polymer resin extruded from the extruder to the nozzle.

The nozzle used in the present invention is a nozzle for preparing thermoplastic polymer particles, which has an input portion into which a thermoplastic polymer resin is injected and a discharge portion from which the thermoplastic polymer resin is sprayed.

Also, in the present invention, the nozzle may be a nozzle having a ratio (A/B) of the area (A) of the discharge portion, from which the thermoplastic polymer resin is sprayed, and the area (B) of the input portion, into which the thermoplastic polymer resin is injected, of 10 to 30. When designing the nozzle, since the area of the input portion into which the resin is injected is not changed, if the ratio (A/B) of the area (A) of the discharge portion from which the resin is sprayed and the area (B) of the input portion into which the resin is injected is less than 10, there is a problem that the average particle diameter is increased. Also, if a nozzle designed with a ratio (A/B) of more than 30 is used, the thickness deviation of the resin becomes large based on the resin injected in the same amount, and eventually, the deviation of the particle diameter of the polymer particles to be prepared becomes severe, thereby causing a problem that the particle-size distribution is widened.

Also, in the present invention, the nozzle may be a nozzle having a retention time of 15 to 45 seconds for the thermoplastic polymer resin injected into the nozzle. If the retention time in the nozzle is less than 15 seconds, the particles are not generated. If the retention time in the nozzle exceeds 45 seconds, the physical properties of the particles may be reduced.

Also, in the present invention, the nozzle may be a nozzle in which the input portion and the discharge portion of the nozzle are connected through a plurality of flow paths. The nozzle of the present invention has an advantage that the uniformity of the size of the particles is increased as the input portion and the discharge portion are connected through a plurality of flow paths.

At this time, the number (n) of the plurality of flow paths may satisfy $X \leq n \leq 60X$, specifically, $2X \leq n \leq 30X$, based on the X value expressed by Calculation Formula 4 below.

[Calculation Formula 4]

$$X = \text{(Length of the circumference of the discharge portion (mm))/(Area of the input portion (mm}^2\text{))}$$

In Calculation Formula 4, the length and area used to obtain the X value have different dimensions in units, but the X value is a value calculated using only numbers based on the length in mm and the area in $mm^2$. In the nozzle of the present invention, if the number of flow paths in the nozzle is reduced, since the probability that the gas collides with the resin at a uniform speed is reduced, there is a problem that the deviation of the particle diameter becomes severe, thereby causing the particle-size distribution to become wider.

Along with the above thermoplastic polymer resin, a gas for spraying is also supplied to nozzle. The gas for spraying used in the present invention is an inert gas. In the preparation method of the thermoplastic polymer particles of the present invention, the inert gas is sprayed with a plurality of sprayers to granulate. The inert gas sprayed by a plurality of sprayers is sprayed toward the thermoplastic polymer resin discharged from the discharge portion of the nozzle, and the inert gas contacts the thermoplastic polymer resin in the nozzle to granulate the thermoplastic polymer resin. In the present invention, by spraying inert gas with a plurality of sprayers to granulate it, unlike the conventional method of manufacturing thermoplastic polymer particles using general air, since the polymer and oxygen contained in air undergo an oxidation reaction in the process of atomizing the polymer resin by spraying air, it prevents the problem that the chain of the polymer chain is broken, and thus the weight average molecular weight of the polymer becomes small. Also, there are advantages that as oxygen contained in air undergoes an oxidation reaction, radicals are formed, a double bond of a chain is generated, and a chromophore is generated due to this double bond, thereby preventing yellowing from occurring.

The plurality of sprayers used in the preparation method of the thermoplastic polymer particles of the present invention may be two, three, or four or more.

If there are two sprayers, the temperature of the first spraying gas is 250 °C to 600 °C and the temperature of the second spraying gas may have a difference of $\pm 10$ °C from the first spraying gas. If there are three sprayers, it is possible to spray the third spraying gas having a temperature higher than 0 °C to 50 °C than the first spraying gas. In addition, if there are four sprayers, it is possible to spray the fourth spraying gas having a temperature higher than 0 °C to 20 °C than the first spraying gas.

If the above temperature conditions are satisfied, the physical properties of the surface in contact with air when the thermoplastic polymer particles are manufactured from the thermoplastic polymer resin can be changed in a desirable direction, and it is possible to prevent the decomposition of the thermoplastic polymer on the surface of the particles by preventing excessive heat from being supplied to the contact surface with air.

In addition, the first spraying gas may be sprayed at an angle of 20 to 70 ° based on the discharging direction of the thermoplastic polymer resin, and the second spraying gas may be sprayed at an angle of 70 to 80° based on the discharging direction of the thermoplastic polymer resin. In addition, the third spraying gas may be sprayed at an angle of 5 to 10° based on the discharging direction of the thermoplastic polymer resin.

At this time, the fourth spraying gas may be sprayed on the melt of the thermoplastic polymer resin flowing down from the nozzle before the thermoplastic polymer is sprayed by the nozzle, and the fourth spraying gas may be sprayed parallel to the discharging direction of the thermoplastic polymer resin.

In the preparation method of the thermoplastic polymer particles of the present invention, the spraying speed of the gas may be 100 to 200 m/s.

The supply position of the thermoplastic polymer resin and air supplied to the nozzle is set so that the thermoplastic polymer particles can have an appropriate size and shape and the formed particles can be evenly distributed. FIG. 3 shows a cross-sectional view of the discharge portion of the nozzle, and the supply location of the thermoplastic polymer resin according to an embodiment of the present invention and air will be described in detail with reference to FIG. 3.

For detailed description herein, the position of the nozzle is expressed as "inlet portion", "discharge portion", and "distal end", and the like. The "inlet portion" of a nozzle refers to the position where the nozzle starts, and the "discharge portion" of the nozzle refers to the position where the nozzle ends. Also, the "distal end" of the nozzle means the position from the two-thirds location point of the nozzle to the discharge portion. Here, the 0 location point of the nozzle is the inlet portion of the nozzle, and the 1 location point of the nozzle is the discharge portion of the nozzle.

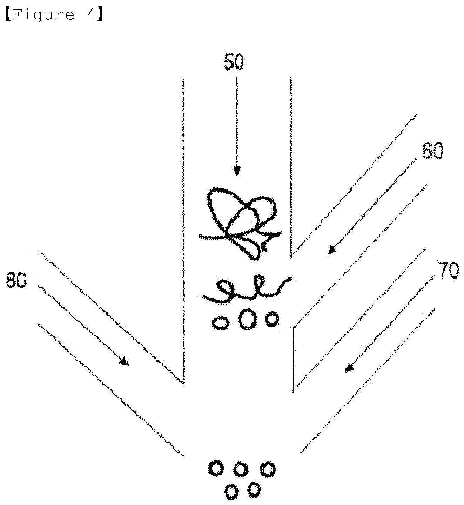

As shown in FIG. 3, the cross-section perpendicular to the flow direction of the thermoplastic polymer resin and air is circular. The first spraying gas and the second spraying gas are supplied through a first gas stream 20 and the third spraying gas is supplied through a second gas stream 40. The thermoplastic polymer resin 30 is supplied together with the fourth spraying gas between the first gas stream 20 and the second gas stream 40. As shown in FIG. 3, from when the thermoplastic polymer resin and inert gas are supplied to the inlet portion of the nozzle to just before the discharge portion of the nozzle, each supply stream (thermoplastic polymer resin and the fourth spraying gas stream 30, the first gas stream 20 and the second gas stream 40) is separated by a structure inside the nozzle. As specifically shown in FIG. 4, the thermoplastic polymer resin meets the fourth spraying gas 50 to form a thin film, and at this time, the fourth spraying gas 50 serves to spread the thermoplastic polymer resin thinly. After this, the thermoplastic polymer resin flows down and first meets the first spraying gas 60 of the first gas stream, wherein the first spraying gas 60 serves to form droplets by breaking the filmed thermoplastic polymer resin. Immediately before the discharge portion of the nozzle, the thermoplastic polymer resin formed as a droplet preserves the amount of heat, while meeting the second spraying gas (70) of the first gas stream and the third spraying gas (80) of the second gas stream, and is discharged from the nozzle, and is not cooled until it enters the cooling chamber, so that a fibrous shape is not formed and the shape of the droplet is maintained. In addition, the second spraying gas 70 of the first gas stream and the third spraying gas 80 of the second gas stream also play an auxiliary role in breaking the thermoplastic polymer resin that has not yet been broken through the first spraying gas to form droplets, while preventing the droplets of the thermoplastic polymer resin from adhering to the discharge portion of the nozzle.

Since the thermoplastic polymer resin is granulated in the nozzle, the inside of the nozzle is adjusted to a suitable temperature for the thermoplastic polymer resin to be granulated. Since the rapid increase in temperature can change the structure of the thermoplastic polymer, the temperature from the extruder to the discharge portion of the nozzle can be increased step by step. Therefore, the internal temperature of the nozzle is set in a range higher than the internal temperature of the extruder on average. Since the temperature of the distal end of the nozzle is separately defined below, the internal temperature of the nozzle in this specification means the average temperature of the rest of the nozzle except for the distal end of the nozzle, unless otherwise specified. According to one embodiment of the present invention, the inside of the nozzle can be maintained at 250 to 350 °C. If the internal temperature of the nozzle is less than 250 °C, it is not possible to transfer sufficient heat to satisfy the physical properties when granulating the thermoplastic polymer resin. If the internal temperature of the nozzle exceeds 350 °C, an excessive heat may be supplied to the thermoplastic polymer resin, thereby changing the structure of the thermoplastic polymer.

The distal end of the nozzle can be maintained at a temperature higher than the average temperature inside the nozzle to improve the external and internal properties of the generated particles. The temperature of the distal end of the nozzle may be determined between the glass transition temperature ($T_g$) and the thermal decomposition temperature ($T_d$) of the thermoplastic polymer, and specifically may be determined according to Calculation Formula 5 below.

$$[\text{Calculation Formula 5}]$$
$$\text{Temperature of the distal end} = \text{Glass transition}$$
$$\text{temperature } (T_g) + (\text{Thermal decomposition temperature } (T_d) -$$
$$\text{Glass transition temperature } (T_g)) \times B$$

wherein B may vary depending on the type of the thermoplastic polymer to be used, but overall, may be 0.5 to 1.5, specifically 0.85 to 1.45. If B is less than 0.5, it is difficult to expect improvement of the external and internal physical properties of the particles according to the rise in the temperature of the distal end of the nozzle. If B is greater than 1.5, the heat transferred substantially from the distal end of the nozzle to the thermoplastic polymer is excessively increased, and thus the structure of the thermoplastic polymer may be deformed. The glass transition temperature and thermal decomposition temperature may vary depending on the type, polymerization degree, structure, and the like of the polymer. According to one embodiment of the present invention, since the distal end of the nozzle is maintained above the average temperature of the nozzle, additional heating means may be provided at the distal end of the nozzle, if desired.

(3) Step of cooling the granulated thermoplastic polymer resin

The thermoplastic polymer particles discharged from the nozzle are supplied to the cooling chamber. The nozzle and the cooling chamber may be spaced apart from each other, and in this case, the discharged thermoplastic polymer particles are primarily cooled by ambient air before being supplied to the cooling chamber. In the nozzle, not only the thermoplastic polymer particles but also high-temperature air are discharged. By separating the nozzle and the cooling chamber, since the high-temperature air can be discharged to the outside instead of the cooling chamber, the cooling efficiency in the cooling chamber can be increased. According to one embodiment of the present invention, the cooling chamber is positioned 0.1 to 1.0 m apart from the nozzle, specifically 0.15 to 0.4 m, more specifically 0.2 to 0.3 m apart. If the separation distance is shorter than the distance, a large amount of high-temperature air is injected into the cooling chamber, and the cooling efficiency is low. If the separation distance is longer than the distance, the amount of cooling by the ambient air is increased, and thus rapid cooling by the cooling chamber cannot be achieved. In addition, when discharging the thermoplastic polymer particles from the nozzle, the spraying angle may be 10 to 60°. When the thermoplastic polymer particles are discharged at the corresponding angle, the effect due to the separation between the nozzle and the cooling chamber can be doubled.

The cooling chamber can cool the thermoplastic polymer particles by supplying low-temperature external air to the inside of the cooling chamber to contact the air and the thermoplastic polymer particles. The low-temperature external air forms a rotational airflow in the cooling chamber. The retention time of the thermoplastic polymer particles in the cooling chamber can be sufficiently secured by the rotational airflow. The flow rate of the external air supplied to the cooling chamber can be adjusted according to the supply amount of the thermoplastic polymer particles. According to one embodiment of the present invention, the external air may be supplied to the cooling chamber at a flow rate of 1 to 10 m$^3$/min. The cooling chamber has an internal temperature of 25 to 40 °C. In order to maintain this temperature, the external air may preferably have a temperature of -30 to -10 °C. The cooling chamber is provided with a plurality of the external air inlet, and the plurality of external air inlet may be installed so as not to interfere with the free-falling flow of the thermoplastic polymer particles. In addition, a plurality of external air inlets may be provided on the upper portion of the cooling chamber, and the external air inlet portion may be installed at 1/2 to 3/4 location points based on concentric circles of the cooling chamber. In addition, a plurality of external air inlets may be provided on the side surface of the cooling chamber, and the inflow velocity of the air of the external air inlet portion may be set to 0.5 to 10 m/s. By supplying cryogenic external air, as compared to the thermoplastic polymer particles supplied to the cooling chamber, into the cooling chamber, the thermoplastic polymer particles are rapidly cooled so that the internal structure of the high temperature thermoplastic polymer particles can be properly maintained during discharging. When the thermoplastic polymer particles are actually applied for the manufacture of products, they are reheated again. At this time, the reheated thermoplastic polymer particles have advantageous physical properties for processing.

(4) Step of collecting the cooled thermoplastic polymer particles

The polypropylene particles cooled by low-temperature external air are cooled to a temperature of 40 °C or less and discharged, and the discharged particles are collected through a cyclone or a bag filter. At this time, the particles can be collected by using a plurality of cyclones in series or in parallel. In addition, the plurality of cyclones can control the collection of the particles by different pressure conditions from each other.

**Nozzle for preparing thermoplastic polymer particles**

The present invention provides a nozzle for preparing thermoplastic polymer particles comprising an input portion into which a thermoplastic polymer resin is injected and a discharge portion from which the thermoplastic polymer resin is sprayed, wherein the input portion and the discharge portion of the nozzle are connected by a plurality of flow paths.
The specific contents of the nozzle for preparing the thermoplastic polymer particles are the same as the nozzle used in the preparation method of the thermoplastic polymer particles, as discussed above.
Hereinafter, preferred Examples are presented to help the understanding of the present invention. However, the following Examples are provided for easier understanding of the present invention, and the present invention is not limited thereto.

**Example**

**Example 1** (polypropylene resin)

100 % by weight of polypropylene resin (PolyMirae, MF650Y, Mw: about 90,000 g/mol, glass transition temperature ($T_g$): about 10 °C, thermal decomposition temperature ($T_d$):
about 300 °C) was supplied to a twin screw extruder (diameter (D)=32 mm, length/diameter (L/D)=40). The twin screw extruder was designed to raise the extruder temperature from 140 °C to 150 °C from the fore-end of the extruder to the 2/10 location point, raise the extruder temperature from 150 °C to 200 °C from the 2/10 location point to the 7/10 location point, and raise the extruder temperature from 200 °C to 225 °C from the 7/10 location point to the distal end, and the extrusion was carried out by setting the condition of an extrusion amount of about 15 kg/hr. In addition, nitrogen gas at a flow rate of 16 L/min was injected into the start portion of the extruder in the extruder, and then allowed to exit from the end portion of the extruder. The extruded polypropylene resin was passed through a mesh screen having 80 mesh. The extruded polypropylene resin has a viscosity of about 10 Pa·s, and the extruded polypropylene resin was supplied to a nozzle having a ratio (A/B) of the area (A) of the discharge portion from which the resin is sprayed and the area (B) of the input portion into which the resin is injected set to 20 and including a plurality of flow paths therein, and the resin was made to have a retention time of 30 seconds. The nozzle was set at an internal temperature of about 300 °C and a distal end temperature of about 400 °C (B value according to Calculation Formula 5 is about 1.34). At this time, the nozzle included 32 flow paths based on Calculation Formula 4 (X value according to Calculation Formula 4 is 9.2). In addition, the first spraying gas that sprays nitrogen gas at about 470 °C at a flow rate of 150m/s at an angle of 45° based on the discharging direction of the polymer resin discharged from the discharge portion of the nozzle, the second spraying gas that sprays at an angle of 75° based on the discharging direction of the polymer resin discharged from the discharge portion at the same temperature and flow rate as the first spraying gas, the third spraying gas that sprays at an angle of 7.5° based on the discharging direction of the polymer resin discharged from the discharge portion at a temperature 25 °C higher than the first spraying gas and at the same flow rate as the first spraying gas, and the fourth spraying gas that sprays in parallel based on the discharging direction of the polymer resin discharged from the discharge portion at a temperature 10 °C higher than the first spraying gas and at the same flow rate as the first spraying gas were sprayed. The polypropylene resin supplied to the nozzle was atomized by contact with the spraying gases, and the atomized particles were sprayed from the nozzle. The atomized particles were supplied to a cooling chamber (diameter (D)=1,100 mm, length (L)=3,500 mm) which is spaced about 200 mm from the nozzle and has an internal temperature of 30 °C. In addition, the cooling chamber was provided with an external air inlet portion which is configured to form a rotating airflow by injecting -25°C air at a flow rate of about 6 $m^3$/min before the sprayed particles are supplied. The external air inlet portion was installed at 3/4 location point based on concentric circles on the top of the cooling chamber. The particles cooled sufficiently to 40 °C or less in the cooling chamber were collected through two cyclones connected in series.

**Example 2** (thermoplastic polyurethane)

100 % by weight of thermoplastic polyurethane resin (Lubrizol, LZM-TPU-95A, Mw: about 100,000 g/mol, glass transition temperature ($T_g$): about -19 °C, thermal decomposition temperature ($T_d$): about 330°C) was supplied to a twin screw extruder (diameter (D)=32 mm, length/diameter (L/D)=40). The twin screw extruder was designed to raise the extruder temperature from 160 °C to 170 °C from the fore-end of the extruder to the 2/10 location point, raise the extruder temperature from 170 °C to 210 °C from the 2/10 location point to the 7/10 location point, and raise the extruder temperature from 210 °C to 220 °C from the 7/10 location point to the distal end, and the extrusion was carried out by setting the condition of an extrusion amount of about 15 kg/hr. In addition, nitrogen gas at a flow rate of 16 L/min was injected into the start portion of the extruder in the extruder, and then allowed to exit from the end portion of the extruder. The extruded thermoplastic polyurethane resin was passed through a mesh screen having 80 mesh. The extruded thermoplastic polyurethane resin has a viscosity of about 5 Pa·s, and the extruded thermoplastic polyurethane resin was supplied to a nozzle having a ratio (A/B) of the area (A) of the discharge portion from which the resin is sprayed and the area (B) of the input portion into which the resin is injected set to 20 and including a plurality of flow paths therein, and the resin was made to have a retention time of 30 seconds. The nozzle was set at an internal temperature of about 280 °C and a distal end temperature of about 335 °C (B value according to Calculation Formula 5 is about 1.01). At this time, the nozzle included 32 flow paths based on Calculation Formula 4. In addition, the first spraying gas that sprays nitrogen gas at about 340 °C at a flow rate of 150 m/s at an angle of 45° based on the discharging direction of the polymer resin discharged from the discharge portion of the nozzle, the second spraying gas that sprays at an angle of 75° based on the discharging direction of the polymer resin discharged from the discharge portion at the same temperature and flow rate as the first spraying gas, the third spraying gas that sprays at an angle of 7.5° based on the discharging direction of the polymer resin discharged from the discharge portion at a temperature 25 °C higher than the first spraying gas and at the same flow rate as the first spraying gas, and the fourth spraying gas that sprays in parallel based on the discharging direction of the polymer resin discharged from the discharge portion at a temperature 10 °C higher than the first spraying gas and at the same flow rate as the first spraying gas were sprayed. The thermoplastic polyurethane resin supplied to the nozzle was atomized by contact with the spraying gases, and the atomized particles were sprayed from the nozzle. The atomized particles were supplied to a cooling chamber (diameter (D)=1,100 mm, length (L)=3,500 mm) which is spaced about 200 mm from the nozzle and has an internal temperature of 30 °C. In addition, the cooling chamber was provided with an external air inlet portion which is configured to form a rotating airflow by injecting -25°C air at a flow rate of about 6 $m^3$/min before the sprayed particles are supplied. The external air inlet portion was installed at 3/4 location point based on concentric circles on the top of the cooling chamber. The particles cooled sufficiently to 40 °C or less in the cooling chamber were collected through two cyclones connected in series.

**Example 3** (polylactic acid)

100 % by weight of polylactic acid resin (Total Corbion, L105, Mw: about 120,000 g/mol, glass transition temperature ($T_g$): about 62 °C, thermal decomposition temperature ($T_d$): about 340 °C) was supplied to a twin screw extruder (diameter (D)=32 mm, length/diameter (L/D)=40). The twin screw extruder was designed to raise the extruder temperature from 150 °C to 160 °C from the fore-end of the extruder to the 2/10 location point, raise the extruder temperature from 160 °C to 190 °C from the 2/10 location point to the 7/10 location point, and raise the extruder temperature from 190 °C to 200 °C from the 7/10 location point to the distal end, and the extrusion was carried out by setting the condition of an extrusion amount of about 15 kg/hr. In addition, nitrogen gas at a flow rate of 16 L/min was injected into the start portion of the extruder in the extruder, and then allowed to exit from the end portion of the extruder. The extruded polylactic acid resin was passed through a mesh screen having 80 mesh. The extruded polylactic acid resin has a viscosity of about 10 Pa·s, and the extruded polylactic acid resin was supplied to a nozzle having a ratio (A/B) of the area (A) of the discharge portion from which the resin is sprayed and the area (B) of the input portion into which the resin is injected set to 20 and including a plurality of flow paths therein, and the resin was made to have a retention time of 30 seconds.

The nozzle was set at an internal temperature of about 300 °C and a distal end temperature of about 400 °C (B value according to Calculation Formula 5 is about 0.82). At this time, the nozzle included 32 flow paths based on Calculation Formula 4. In addition, the first spraying gas that sprays nitrogen gas at about 420 °C at a flow rate of 150 m/s at an angle of 45° based on the discharging direction of the polymer resin discharged from the discharge portion of the nozzle, the second spraying gas that sprays at an angle of 75° based on the discharging direction of the polymer resin discharged from the discharge portion at the same temperature and flow rate as the first spraying gas, the third spraying gas that sprays at an angle of 7.5° based on the discharging direction of the polymer resin discharged from the discharge portion at a temperature 25 °C higher than the first spraying gas and at the same flow rate as the first spraying gas, and the fourth spraying gas that sprays in parallel based on the discharging direction of the polymer resin discharged from the discharge portion at a temperature 10 °C higher than the first spraying gas and at the same flow rate as the first spraying gas were sprayed. The polylactic acid resin supplied to the nozzle was atomized by contact with the spraying gases, and the atomized particles were sprayed from the nozzle. The atomized particles were supplied to a cooling chamber (diameter (D)=1,100 mm, length (L)=3,500 mm) which is spaced about 200 mm from the nozzle and has an internal temperature of 30 °C. In addition, the cooling chamber was provided with an external air inlet portion which is configured to form a rotating airflow by injecting -25°C air at a flow rate of about 6 m$^3$/min before the sprayed particles are supplied. The external air inlet portion was installed at 3/4 location point based on concentric circles on the top of the cooling chamber. The particles cooled sufficiently to 40 °C or less in the cooling chamber were collected through two cyclones connected in series.

**Example 4** (polyamide)

100 % by weight of polyamide resin (BASF, Ultramid® 8202C, Mw: about 65,000 g/mol, glass transition temperature ($T_g$): about 50 °C, thermal decomposition temperature ($T_d$): about 450 °C) was supplied to a twin screw extruder (diameter (D)=32 mm, length/diameter (L/D)=40). The twin screw extruder was designed to raise the extruder temperature from 240 °C to 250 °C from the fore-end of the extruder to the 2/10 location point, raise the extruder temperature from 250 °C to 300 °C from the 2/10 location point to the 7/10 location point, and raise the extruder temperature from 300 °C to 320 °C from the 7/10 location point to the distal end, and the extrusion was carried out by setting the condition of an extrusion amount of about 15 kg/hr. In addition, nitrogen gas at a flow rate of 16 L/min was injected into the start portion of the extruder in the extruder, and then allowed to exit from the end portion of the extruder. The extruded polyamide resin was passed through a mesh screen having 80 mesh. The extruded polyamide resin has a viscosity of about 20 Pa·s, and the extruded polyamide resin was supplied to a nozzle having a ratio (A/B) of the area (A) of the discharge portion from which the resin is sprayed and the area (B) of the input portion into which the resin is injected set to 20 and including a plurality of flow paths therein, and the resin was made to have a retention time of 30 seconds. The nozzle was set at an internal temperature of about 430 °C and a distal end temperature of about 470 °C (B value according to Calculation Formula 5 is about 1.05). At this time, the nozzle included 32 flow paths based on Calculation Formula 4. In addition, the first spraying gas that sprays nitrogen gas at about 550 °C at a flow rate of 150 m/s at an angle of 45° based on the discharging direction of the polymer resin discharged from the discharge portion of the nozzle, the second spraying gas that sprays at an angle of 75° based on the discharging direction of the polymer resin discharged from the discharge portion at the same temperature and flow rate as the first spraying gas, the third spraying gas that sprays at an angle of 7.5° based on the discharging direction of the polymer resin discharged from the discharge portion at a temperature 25 °C higher than the first spraying gas and at the same flow rate as the first spraying gas, and the fourth spraying gas that sprays in parallel based on the discharging direction of the polymer resin discharged from the discharge portion at a temperature 10 °C higher than the first spraying gas and at the same flow rate as the first spraying gas were sprayed. The polyamide resin supplied to the nozzle was atomized by contact with the spraying gases, and the atomized particles were sprayed from the nozzle. The atomized particles were supplied to a cooling chamber (diameter (D)=1,100 mm, length (L)=3,500 mm) which is spaced about 200 mm from the nozzle and has an internal temperature of 30 °C. In addition, the cooling chamber was provided with an external air inlet portion which is configured to form a rotating airflow by injecting -25°C air at a flow rate of about 6 m$^3$/min before the sprayed particles are supplied. The external air inlet portion was installed at 3/4 location point based on concentric circles on the top of the cooling chamber. The particles cooled sufficiently to 40 °C or less in the cooling chamber were collected through two cyclones connected in series.

**Example 5** (polyether sulfone)

100 % by weight of polyether sulfone resin (BASF, E1010, Mw: about 45,000 g/mol, glass transition temperature ($T_g$): about 220 °C, thermal decomposition temperature ($T_d$): about 460 °C) was supplied to a twin screw extruder (diameter (D)=32 mm, length/diameter (L/D)=40). The twin screw extruder was designed to raise the extruder temperature from 370 °C to 380 °C from the fore-end of the extruder to the 2/10 location point, raise the extruder temperature from 380 °C to 400 °C from the 2/10 location point to the 7/10 location point, and raise the extruder temperature from 400 °C to 420 °C from the 7/10 location point to the distal end, and the extrusion was carried out by setting the condition of an extrusion amount of about 15 kg/hr. In addition, nitrogen gas at a flow rate of 16 L/min was injected into the start portion of the extruder in the extruder, and then allowed to exit from the end portion of the extruder. The extruded polyether sulfone resin was passed through a mesh screen having 80 mesh. The extruded polyether sulfone resin has a viscosity of about 20 Pa·s, and the extruded polyether sulfone resin was supplied to a nozzle having a ratio (A/B) of the area (A) of the discharge portion from which the resin is sprayed and the area (B) of the input portion into which the resin is injected set to 20 and including a plurality of flow paths therein, and the resin was made to have a retention time of 30 seconds. The nozzle was set at an internal temperature of about 440 °C and a distal end temperature of about 480 °C (B value according to Calculation Formula 5 is about 1.08). At this time, the nozzle included 32 flow paths based on Calculation Formula 4. In addition, the first spraying gas that sprays nitrogen gas at about 580 °C at a flow rate of 150 m/s at an angle of 45° based on the discharging direction of the polymer resin discharged from the discharge portion of the nozzle, the second spraying gas that sprays at an angle of 75° based on the discharging direction of the polymer resin discharged from the discharge portion at the same temperature and flow rate as the first spraying gas, the third spraying gas that sprays at an angle of 7.5° based on the discharging direction of the polymer resin discharged from the discharge portion at a temperature 25 °C higher than the first spraying gas and at the same flow rate as the first spraying gas, and the fourth spraying gas that sprays in parallel based on the discharging direction of the polymer resin discharged from the discharge portion at a temperature 10 °C higher than the first spraying gas and at the same flow rate as the first spraying gas were sprayed. The polyether sulfone resin supplied to the nozzle was atomized by contact with the spraying gases, and the atomized particles were sprayed from the nozzle. The atomized particles were supplied to a cooling chamber (diameter (D)=1,100 mm, length (L)=3,500 mm) which is spaced about 200 mm from the nozzle and has an internal temperature of 30 °C. In addition, the cooling chamber was provided with an external air inlet portion which is configured to form a rotating airflow by injecting -25°C air at a flow rate of about 6 $m^3$/min before the sprayed particles are supplied. The external air inlet portion was installed at 3/4 location point based on concentric circles on the top of the cooling chamber. The particles cooled sufficiently to 40 °C or less in the cooling chamber were collected through two cyclones connected in series.

**Comparative example 1-1**

Polymer particles were prepared in the same manner as Example 1, except that only the first spraying gas that sprays at an angle of 45° based on the discharging direction of the polymer resin discharged from the discharge portion of the nozzle was sprayed, and the second spraying gas to the fourth spraying gas were not sprayed.

**Comparative example 1-2**

Polymer particles were prepared in the same manner as Example 1, except that the twin screw extruder was set to raise the extruder temperature from 130 °C to 140 °C from the fore-end of the extruder to the 2/10 location point, raise the extruder temperature from 140 °C to 170 °C from the 2/10 location point to the 7/10 location point, and raise the extruder temperature from 170 °C to 200 °C from the 7/10 location point to the distal end.

**Comparative example 1-3**

Polymer particles were prepared in the same manner as Example 1, except that the polymer resin did not pass through the mesh screen.

**Comparative example 1-4**

Polymer particles were prepared in the same manner as Example 1, except that the nozzle having a ratio (A/B) of the area (A) of the discharge portion from which the resin is sprayed and the area (B) of the input portion into which the resin is injected set to 35 was used.

**Comparative example 1-5**

Polymer particles were prepared in the same manner as Example 1, except that the nozzle comprising 4 flow paths based on Calculation Formula 4 (X value according to Calculation Formula 4 is 9.2) was used.

**Comparative example 1-6**

Polymer particles were prepared in the same manner as in Example 1, except that nitrogen gas was not injected into the extruder.

**Comparative example 1-7**

Polymer particles were prepared in the same manner as in Example 1, except that general air instead of nitrogen gas was sprayed onto the polymer resin discharged from the discharge portion.

**Comparative example 2-1**

Polymer particles were prepared in the same manner as Example 2, except that only the first spraying gas that sprays at an angle of 45° based on the discharging direction of the polymer resin discharged from the discharge portion of the nozzle was sprayed, and the second spraying gas to the fourth spraying gas were not sprayed.

**Comparative example 2-2**

Polymer particles were prepared in the same manner as Example 2, except that the twin screw extruder was set to raise the extruder temperature from 140 °C to 150 °C from the fore-end of the extruder to the 2/10 location point, raise the extruder temperature from 150 °C to 180 °C from the 2/10 location point to the 7/10 location point, and raise the extruder temperature from 180 °C to 200 °C from the 7/10 location point to the distal end.

**Comparative example 2-3**

Polymer particles were prepared in the same manner as Example 2, except that the polymer resin did not pass through the mesh screen.

**Comparative example 2-4**

Polymer particles were prepared in the same manner as Example 2, except that the nozzle having a ratio (A/B) of the area (A) of the discharge portion from which the resin is sprayed and the area (B) of the input portion into which the resin is injected set to 35 was used.

**Comparative example 2-5**

Polymer particles were prepared in the same manner as Example 2, except that the nozzle comprising 4 flow paths based on Calculation Formula 4 (X value according to Calculation Formula 4 is 9.2) was used.

**Comparative example 2-6**

Polymer particles were prepared in the same manner as in Example 2, except that nitrogen gas was not injected into the extruder.

**Comparative example 2-7**

Polymer particles were prepared in the same manner as in Example 2, except that general air instead of nitrogen gas was sprayed onto the polymer resin discharged from the discharge portion.

**Comparative example 3-1**

Polymer particles were prepared in the same manner as Example 3, except that only the first spraying gas that sprays at an angle of 45° based on the discharging direction of the polymer resin discharged from the discharge portion of the nozzle was sprayed, and the second spraying gas to the fourth spraying gas were not sprayed.

**Comparative example 3-2**

Polymer particles were prepared in the same manner as Example 3, except that the twin screw extruder was set to raise the extruder temperature from 140 °C to 150 °C from the fore-end of the extruder to the 2/10 location point, raise the extruder temperature from 150 °C to 170 °C from the 2/10 location point to the 7/10 location point, and raise the extruder temperature from 170 °C to 180 °C from the 7/10 location point to the distal end.

**Comparative example 3-3**

Polymer particles were prepared in the same manner as Example 3, except that the polymer resin did not pass through the mesh screen.

**Comparative example 3-4**

Polymer particles were prepared in the same manner as Example 3, except that the nozzle having a ratio (A/B) of the area (A) of the discharge portion from which the resin is sprayed and the area (B) of the input portion into which the resin is injected set to 35 was used.

**Comparative example 3-5**

Polymer particles were prepared in the same manner as Example 3, except that the nozzle comprising 4 flow paths based on Calculation Formula 4 (X value according to Calculation Formula 4 is 9.2) was used.

**Comparative example 3-6**

Polymer particles were prepared in the same manner as in Example 3, except that nitrogen gas was not injected into the extruder.

**Comparative example 3-7**

Polymer particles were prepared in the same manner as in Example 3, except that general air instead of nitrogen gas was sprayed onto the polymer resin discharged from the discharge portion.

**Comparative example 4-1**

Polymer particles were prepared in the same manner as Example 4, except that only the first spraying gas that sprays at an angle of 45° based on the discharging direction of the polymer resin discharged from the discharge portion of the nozzle was sprayed, and the second spraying gas to the fourth spraying gas were not sprayed.

**Comparative example 4-2**

Polymer particles were prepared in the same manner as Example 4, except that the twin screw extruder was set to raise the extruder temperature from 230 °C to 240 °C from the fore-end of the extruder to the 2/10 location point, raise the extruder temperature from 240 °C to 280 °C from the 2/10 location point to the 7/10 location point, and raise the extruder temperature from 280 °C to 300 °C from the 7/10 location point to the distal end.

**Comparative example 4-3**

Polymer particles were prepared in the same manner as Example 4, except that the polymer resin did not pass through the mesh screen.

**Comparative example 4-4**

Polymer particles were prepared in the same manner as Example 4, except that the nozzle having a ratio (A/B) of the area (A) of the discharge portion from which the resin is sprayed and the area (B) of the input portion into which the resin is injected set to 35 was used.

**Comparative example 4-5**

Polymer particles were prepared in the same manner as Example 4, except that the nozzle comprising 4 flow paths based on Calculation Formula 4 (X value according to Calculation Formula 4 is 9.2) was used.

**Comparative example 4-6**

Polymer particles were prepared in the same manner as in Example 4, except that nitrogen gas was not injected into the extruder.

**Comparative example 4-7**

Polymer particles were prepared in the same manner as in Example 4, except that general air instead of nitrogen gas was sprayed onto the polymer resin discharged from the discharge portion.

**Comparative example 5-1**

Polymer particles were prepared in the same manner as Example 5, except that only the first spraying gas that sprays at an angle of 45° based on the discharging direction of the polymer resin discharged from the discharge portion of the nozzle was sprayed, and the second spraying gas to the fourth spraying gas were not sprayed.

**Comparative example 5-2**

Polymer particles were prepared in the same manner as Example 5, except that the twin screw extruder was set to raise the extruder temperature from 360 °C to 370 °C from the fore-end of the extruder to the 2/10 location point, raise the extruder temperature from 370 °C to 390 °C from the 2/10 location point to the 7/10 location point, and raise the extruder temperature from 390 °C to 400 °C from the 7/10 location point to the distal end.

**Comparative example 5-3**

Polymer particles were prepared in the same manner as Example 5, except that the polymer resin did not pass through the mesh screen.

**Comparative example 5-4**

Polymer particles were prepared in the same manner as Example 5, except that the nozzle having a ratio (A/B) of the area (A) of the discharge portion from which the resin is sprayed and the area (B) of the input portion into which the resin is injected set to 35 was used.

**Comparative example 5-5**

Polymer particles were prepared in the same manner as Example 5, except that the nozzle comprising 4 flow paths based on Calculation Formula 4 (X value according to Calculation Formula 4 is 9.2) was used.

**Comparative example 5-6**

Polymer particles were prepared in the same manner as in Example 5, except that nitrogen gas was not injected into the extruder.

**Comparative example 5-7**

Polymer particles were prepared in the same manner as in Example 5, except that general air instead of nitrogen gas was sprayed onto the polymer resin discharged from the discharge portion.

**Experimental Example 1**

The particle size distribution of the polymer resin particles prepared according to Examples 1 to 5 and Comparative Examples 1-1 to 5-5 was measured in the following manner, and the results are shown in Tables 1 to 2 below. Specifically, for particle size distribution of Example 3 and Comparative Examples 3-1 to 3-5, sample pretreatment was performed in the following 1-2) manner, and for all Examples except for Example 3 and all Comparative examples except for Comparative examples 3-1 to 3-5, sample pretreatment was performed in the manner 1-1). After that, particle-size distribution was measured by method 2).

1-1) Sample pretreatment: A powder sample is placed in ethanol in an amount of about 0.003 wt%, and a 50 Watt/30 kHz ultrasonic disperser is set to 30% of the maximum amplitude, and the powder sample is dispersed in ethanol by excitation of ultrasonic waves for about 120 seconds.

1-2) Sample pretreatment: About 0.003 wt% of a powder sample is added to distilled water to which 0.1 wt% of PEO/PPO ethylene derivative as a dispersant has been added, and a 50 Watt/30 kHz ultrasonic disperser is set to 30% of the maximum amplitude, and the powder sample is dispersed in the distilled water by excitation of ultrasonic waves for about 120 seconds.

2) Measurement of particle-size distribution: Particle size distribution is measured according to ISO 13320 standard.

Table 1:

|  | Particle size distribution | | |
|---|---|---|---|
|  | $D_{10}(\mu m)$ | $D_{50}(\mu m)$ | $D_{90}(\mu m)$ |
| Example 1 | 11 | 32 | 89 |
| Comparative example 1-1 | 20 | 75 | 132 |
| Comparative example 1-2 | 16 | 52 | 131 |
| Example 2 | 24 | 56 | 100 |
| Comparative example 2-1 | 36 | 92 | 124 |
| Comparative example 2-2 | 30 | 72 | 115 |
| Example 3 | 6 | 15 | 28 |
| Comparative example 3-1 | 12 | 25 | 55 |
| Comparative example 3-2 | 10 | 20 | 48 |
| Example 4 | 20 | 58 | 101 |
| Comparative example 4-1 | 30 | 88 | 131 |
| Comparative example 4-2 | 26 | 75 | 127 |
| Example 5 | 28 | 65 | 115 |
| Comparative example 5-1 | 40 | 95 | 147 |
| Comparative example 5-2 | 35 | 83 | 133 |

Table 2:

|  | Particle size distribution | | | |
|---|---|---|---|---|
|  | $D10(\mu m)$ | $D_{50}(\mu m)$ | $D_{90}(\mu m)$ | D |
| Example 1 | 11 | 32 | 89 | 16 |
| Comparative example 1-3 | 7 | 31 | 105 | 31 |
| Comparative example 1-4 | 4 | 31 | 109 | 72 |
| Comparative example 1-5 | 5 | 33 | 107 | 54 |
| Example 2 | 24 | 56 | 100 | 8.6 |
| Comparative example 2-3 | 11 | 55 | 123 | 30 |
| Comparative example 2-4 | 7 | 56 | 138 | 70 |
| Comparative example 2-5 | 9 | 59 | 135 | 48 |
| Example 3 | 6 | 15 | 28 | 9.7 |
| Comparative example 3-3 | 4 | 14 | 56 | 28 |
| Comparative example 3-4 | 2 | 15 | 59 | 72 |
| Comparative example 3-5 | 3 | 19 | 58 | 49 |
| Example 4 | 20 | 58 | 101 | 11 |
| Comparative example 4-3 | 11 | 57 | 117 | 31 |

(continued)

| | Particle size distribution | | | |
|---|---|---|---|---|
| | D10($\mu$m) | $D_{50}$($\mu$m) | $D_{90}$($\mu$m) | D |
| Comparative example 4-4 | 7 | 55 | 138 | 68 |
| Comparative example 4-5 | 8 | 56 | 132 | 55 |
| Example 5 | 28 | 65 | 115 | 8.5 |
| Comparative example 5-3 | 13 | 64 | 140 | 29 |
| Comparative example 5-4 | 8 | 66 | 149 | 73 |
| Comparative example 5-5 | 10 | 67 | 145 | 50 |

According to Tables 1 to 2, it can be seen that the particle diameter of the particles prepared according to Example 1 was 25 to 30 $\mu$m smaller than the $D_{90}$ average particle diameter, unlike the particle diameter of the particles prepared according to Comparative examples 1-1 to 1-5. The particle diameters of the particles prepared according to Examples 2 to 5 also show the same trend as described above.

First, when comparing Examples 1 to 5 with Comparative examples 1-1 to 5-1, in the case of Comparative examples 1-1 to 5-1 using only the first spraying gas, since the probability (number of times) that the polymers meet the gas is smaller than that in the case of Examples 1 to 5 using the first to fourth spraying gases, the powder is prepared with a relatively large particle-size distribution.

In addition, when comparing Examples 1 to 5 with Comparative examples 1-2 to 5-2, in the case of Comparative Examples 1-2 to 5-2, where the temperature condition of the extruder is generally low, as the amount of heat received by the resin from the extruder is relatively small, the particle-size distribution becomes larger as compared to Examples 1 to 5.

In addition, when comparing Examples 1 to 5 with Comparative examples 1-3 to 5-3, in the case of Comparative examples 1-3 to 5-3, where the particles are prepared without passing the polymer resin through a mesh screen, the gelation of polymers is not uniform, and thus the deviation of particle diameter becomes severe. That is, the particle-size distribution is widened.

In addition, when comparing Examples 1 to 5 with Comparative examples 1-4 to 5-4, the area of the input portion into which the resin is injected is not changed when designing the nozzle. Accordingly, if the nozzles of Comparative examples 1-4 to 5-4 having a ratio (A/B) of the area (A) of the discharge portion from which the resin is sprayed and the area (B) of the input portion into which the resin is injected set to 35, are used, the ratio (A/B) is large compared to Examples 1 to 5 set to 20. Accordingly, if the input amount of the resin is the same, the thickness deviation of the resin becomes large and thus the deviation of the particle diameter becomes severe. Therefore, the particle-size distribution is widened.

In addition, when comparing Examples 1 to 5 with Comparative examples 1-5 to 5-5, if the number of gas flow paths is reduced, since the probability that the gas collides with the resin at a uniform speed is reduced, the deviation of the particle diameter becomes severe and thus the particle-size distribution is widened.

In addition, when comparing Examples 1 to 5 with Comparative examples 1-3 to 5-3, Comparative examples 1-4 to 5-4, and Comparative examples 1-5 to 5-5, it was found that in the case of Examples 1 to 5, it has a D value of 5 to 20, more specifically 7 to 18, specifically, in the case of polypropylene, it has a D value of 10 to 20, preferably 13 to 18, in the case of thermoplastic polyurethane, it has a D value of 5 to 12, preferably 7 to 10, in the case of polylactic acid, it has a D value of 6 to 13, preferably 8 to 11, in the case of polyamide, it has a D value of 7 to 15, preferably 8 to 14, and in the case of polyether sulfone, it has a D value of 5 to 12, preferably 7 to 10. As the particles satisfy the D value in the above-mentioned range, large particles and small particles could be distributed in an appropriate ratio around the average particle diameter, thereby exhibiting excellent physical properties when applied to actual products.

Therefore, if the particles have the same particle diameter distribution as the particles prepared according to Examples 1 to 5, when applied to products, it can effectively compensate for the shortcomings of the case that only controls the average particle diameter.

**Experimental Example 2**

The physical properties of the particles prepared according to Examples 1 to 5 and Comparative Examples 1-6 and 1-7, 2-6 and 2-7, 3-6 and 3-7, 4-6 and 4-7 and 5-6 and 5-7 were measured, and the results are shown in Table 3 below.

In the case of the following weight average molecular weight, it was measured using the GPC method using a measuring device of the 1200 series of Agilent Technologies company.

Specifically, for Example 1 and Comparative examples 1-6 and 1-7, a sample pretreatment was performed in the manner of 1-1), for Example 3 and Comparative examples 3-6 and 3-7, a sample pretreatment was performed in the manner of 1-2), and for the remaining Examples and Comparative examples except for Example 1 and Example 3, Comparative examples 1-6 and 1-7, and Comparative examples 3-6 and 3-7, a sample pretreatment was performed in the manner of 1-3).

1-1) Sample pretreatment : 30 mg of powder sample is completely dissolved by using 10 ml of trichlorobenzene solvent containing 0.04% concentration of butylylated hydroxytoluene solvent, and then filtered using a polytetrafluoroethylene filter having a pore size of 0.45 $\mu$m.

1-2) Sample pretreatment : 50 mg of the powder sample is completely dissolved using 10 ml of chloroform solvent, and then filtered using a polytetrafluoroethylene filter having a pore size of 0.45 $\mu$m.

1-3) Sample pretreatment : 50 mg of the powder sample is completely dissolved using 10 ml of a dimethylformamide solvent containing 0.05 molar concentration of lithium bromide (LiBr), and then filtered using a polytetrafluoroethylene filter having a pore size of 0.45 $\mu$m.

Thereafter, for Example 1 and Comparative examples 1-6 and 1-7, the weight average molecular weight was measured using a high-temperature GPC instrument, and for Examples 2 to 5 and Comparative Examples 2-6 to 5-7, the weight average molecular weight was measured using a general GPC instrument, and the results are described in Table 3 below.

The B * value is an indicator that expresses the degree of yellow and blue in the color measurement of the object, and it means that the larger the + value, the more yellow, and the larger the - value, the closer the blue color.

To the frame, the powder was added, and pressed at 1 bar for one minute and at 7 bar for three minutes at room temperature using a powder press machine to prepare a sample for B * measurement, and then B * was measured using a portable color-difference meter called the Spectro-guide of BYK Gardner company, and the results are described in Table 3 below.

Table 3:

|  | Weight average molecular weight (g/mol) | b* |
|---|---|---|
| Example 1 | 54, 000 | -0.47 |
| Comparative example 1-6 | 50, 000 | -0.38 |
| Comparative example 1-7 | 35,000 | 2.12 |
| Example 2 | 60,000 | 5.45 |
| Comparative example 2-6 | 56,000 | 5.72 |
| Comparative example 2-7 | 45,000 | 11.5 |
| Example 3 | 42,200 | 5.16 |
| Comparative example 3-6 | 39,000 | 5.35 |
| Comparative example 3-7 | 29,000 | 9.69 |
| Example 4 | 57,500 | 6.44 |
| Comparative example 4-6 | 53,000 | 6.76 |
| Comparative example 4-7 | 45,000 | 13.22 |
| Example 5 | 41,000 | 5.75 |
| Comparative example 5-6 | 37,000 | 5.96 |
| Comparative example 5-7 | 30,000 | 12.47 |

According to Table 3, it was found that the particles of Comparative Example 1-7 decreased in weight average molecular weight compared to the particles of Example 1. In the case of Comparative example 1-7, the reason is that as the polymer and oxygen contained in the air undergo an oxidation reaction in the process of atomizing the polymer resin discharged from the discharge portion by spraying air, the chain of the polymer chain is broken, and accordingly, the weight average molecular weight of the polymer decreases. However, in the case of Example 1, it was found that as nitrogen gas, which is an inert gas, is injected into the polymer resin, the oxidation reaction does not occur, and thus the molecular weight does not decrease.

In addition, it can be seen that the particles of Comparative example 1-6 do not have a large change in molecular weight compared to Example 1, which means that atomizing the polymer resin discharged from the discharge portion of the nozzle by spraying nitrogen gas, rather than introducing nitrogen into the extruder, is more effective in preventing the decrease in molecular weight. In addition, it was found that the particles of Comparative example 1-7 caused a color change compared to the particles of Example 1. Also, in this regard, as the polymer and oxygen contained in the air undergo an oxidation reaction in the process of atomizing the polymer resin discharged from the discharge portion by spraying air, radicals are formed and thus a double bond in the chain occurs, and a chromophore is generated due to this double bond, resulting in yellowing. However, in the case of Example 1, as nitrogen gas, which is an inert gas, was injected into the polymer resin, the formation of radicals was suppressed to prevent generation of chromophores due to the generation of double bonds, thereby preventing yellowing. Also, it can be seen that the particles of Comparative example 1-6 do not have a large change in b* value compared to Example 1, which means that atomizing the polymer resin discharged from the discharge portion of the nozzle by spraying nitrogen gas, rather than introducing nitrogen into the extruder, is more effective in minimizing yellowing.

The particles prepared according to Examples 2 to 5 and the particles prepared according to Comparative examples 2-6 and 2-7, 3-6 and 3-7, 4-6 and 4-7 and 5-6 and 5-7 also showed the same tendency as described above.

All simple modifications or variations of the present invention are within the scope of the present invention, and the specific protection scope of the present invention will be made clear by the appended claims.

[Description of Symbol]

    10: nozzle
    20: First gas stream (first spraying gas, second spraying gas)
    30: Thermoplastic polymer resin and fourth spraying gas stream
    40: Second gas stream (third spraying gas)
    50: Fourth spraying gas
    60: First spraying gas
    70: Second spraying gas
    80: Third spraying gas

**Claims**

1. A method for preparing thermoplastic polymer particles comprising,

    (1) extruding a thermoplastic polymer resin through an extruder;
    (2) granulating the extruded polymer resin with inert gas; and
    (3) cooling the granulated thermoplastic polymer resin.

2. The method for preparing the thermoplastic polymer particles according to claim 1, further comprising a step of, (4) collecting the cooled thermoplastic polymer particles.

3. The method for preparing the thermoplastic polymer particles according to claim 1, further comprising a step of, (1-1) passing the extruded thermoplastic polymer through a mesh screen between step (1) and step (2).

4. The method for preparing the thermoplastic polymer particles according to claim 1, wherein the polymer is a polymer selected from the group consisting of polypropylene, thermoplastic polyurethane, polylactic acid, polyamide and polyether sulfone.

5. The method for preparing the thermoplastic polymer particles according to claim 1, wherein the polymer resin of step (1) is extruded at an extrusion rate of 1kg/hr to 20kg/hr.

6. The method for preparing the thermoplastic polymer particles according to claim 1, wherein in step (1), the inert gas is injected into the extruder.

7. The method for preparing the thermoplastic polymer particles according to claim 6, wherein the inert gas is injected into the start portion of the extruder and comes out from the end portion of the extruder.

8. The method for preparing the thermoplastic polymer particles according to claim 6, wherein the inert gas is injected at a flow rate of 4 to 64 L/min.

9. The method for preparing the thermoplastic polymer particles according to claim 1, wherein the inert gas sprayed by a plurality of sprayers is sprayed toward the thermoplastic polymer resin discharged from the discharge portion of the nozzle, the temperature of the first spraying gas is 250 °C to 600 °C, and the temperature of the second spraying gas is different from the first spraying gas by ±10 °C.

10. The method for preparing the thermoplastic polymer particles according to claim 9, wherein the temperature of the third spraying gas is 0 °C to 50 °C higher than the first spraying gas.

11. The method for preparing the thermoplastic polymer particles according to claim 9, wherein the temperature of the fourth spraying gas is 0 °C to 20 °C higher than the first spraying gas.

12. The method for preparing the thermoplastic polymer particles according to claim 9, wherein in step (2), before the thermoplastic polymer is sprayed by the nozzle, the fourth spraying gas is sprayed on the melt of the thermoplastic polymer resin flowing down from the nozzle.

13. The method for preparing the thermoplastic polymer particles according to claim 1, wherein in step (2), the gas is sprayed so that the spraying speed of the gas becomes 100 to 200 m/s.

14. The method for preparing the thermoplastic polymer particles according to claim 9, wherein the first spraying gas is sprayed at an angle of 20 to 70° based on the discharging direction of the thermoplastic polymer resin, and the second spraying gas is sprayed at an angle of 70 to 80° based on the discharging direction of the thermoplastic polymer resin.

15. The method for preparing the thermoplastic polymer particles according to claim 10, wherein the third spraying gas is sprayed at an angle of -5 to -10° based on the discharging direction of the thermoplastic polymer resin, and the fourth spraying gas is sprayed parallel to the discharging direction of the thermoplastic polymer resin.

16. The method for preparing the thermoplastic polymer particles according to claim 1, wherein in step (3), the distance between the nozzle and the cooling chamber is 0.1 to 1.0 m.

17. The method for preparing the thermoplastic polymer particles according to claim 1, wherein in step (3), the granulated thermoplastic polymer resin is cooled by a cooling chamber having an internal temperature of 25 to 40 °C

18. The method for preparing the thermoplastic polymer particles according to claim 17, wherein the cooling chamber is provided with an external air inlet into which external air at -30 to -10 °C is introduced.

19. The method for preparing the thermoplastic polymer particles according to claim 18, wherein the cooling chamber is provided with a plurality of external air inlets, and the plurality of external air inlets are installed so as not to interfere with the free-falling flow of the thermoplastic polymer particles.

20. The method for preparing the thermoplastic polymer particles according to claim 19, wherein the plurality of external air inlets are provided on the upper portion of the cooling chamber, and the external air inlet portion is installed at 1/2 to 3/4 location points based on concentric circles of the cooling chamber.

21. The method for preparing the thermoplastic polymer particles according to claim 19, wherein the plurality of external air inlets are provided on the side surface of the cooling chamber, and the air inflow velocity of the external air inlet portion is 0.5 to 10 m/s.

22. The method for preparing the thermoplastic polymer particles according to claim 2, wherein in step (4), the particles are collected by using a plurality of cyclones in series or in parallel.

23. The method for preparing the thermoplastic polymer particles according to claim 22, wherein the plurality of cyclones controls the collection of the particles by different pressure conditions from each other.

24. The method for preparing the thermoplastic polymer particles according to claim 3, wherein the mesh screen of step (1-1) has 60 to 100 meshes.

25. The method for preparing the thermoplastic polymer particles according to claim 1, wherein the inert gas is at least one selected from the group consisting of nitrogen, helium, argon and neon.

26. The method for preparing the thermoplastic polymer particles according to claim 6, wherein the inert gas is at least one selected from the group consisting of nitrogen, helium, argon and neon.

27. Polypropylene particles formed as a continuous matrix phase, wherein the weight average molecular weight (Mw) of the particles is 40,000 to 70,000 g/mol.

28. Thermoplastic polyurethane particles formed as a continuous matrix phase, wherein the weight average molecular weight (Mw) of the particles is 50,000 to 80,000 g/mol.

29. Polylactic acid particles formed as a continuous matrix phase, wherein the weight average molecular weight (Mw) of the particles is 35,000 to 60,000 g/mol.

30. Polyamide particles formed as a continuous matrix phase, wherein the weight average molecular weight (Mw) of the particles is 50,000 to 65,000 g/mol.

31. Polyether sulfone particles formed as a continuous matrix phase, wherein the weight average molecular weight (Mw) of the particles is 35,000 to 50,000 g/mol.

32. Polypropylene particles formed as a continuous matrix phase, wherein the b* value of the particles is 1.0 or less.

33. Thermoplastic polyurethane particles formed as a continuous matrix phase, wherein the b* value of the particles is 10.0 or less.

34. Polylactic acid particles formed as a continuous matrix phase, wherein the b* value of the particles is 8.0 or less.

35. Polyamide particles formed as a continuous matrix phase, wherein the b* value of the particles is 12.0 or less.

36. Polyether sulfone particles formed as a continuous matrix phase, wherein the b* value of the particles is 10.0 or less.

【Figure 1】

【Figure 2】

```
                                                              S100
┌──────────────────────────────────────────────────────────┐
│                                                            │
│     Step of extruding a polymer resin through an extruder  │
│                                                            │
└──────────────────────────────────────────────────────────┘
                              │
                              ▼                               S200
┌──────────────────────────────────────────────────────────┐
│  Step of spraying the extruded polymer resin through a nozzle and then │
│  spraying a gas to the sprayed polymer resin through a plurality of    │
│  sprayers so as to granulate the same                      │
└──────────────────────────────────────────────────────────┘
                              │
                              ▼                               S300
┌──────────────────────────────────────────────────────────┐
│                                                            │
│     Step of cooling the granulated polymer resin           │
│                                                            │
└──────────────────────────────────────────────────────────┘
```

【Figure 3】

【Figure 4】

## INTERNATIONAL SEARCH REPORT

| | International application No. |
|---|---|
| | **PCT/KR2020/012291** |

**A. CLASSIFICATION OF SUBJECT MATTER**

**C08J 3/12**(2006.01)i; **C08L 67/04**(2006.01)i; **C08L 77/00**(2006.01)i; **B29B 11/14**(2006.01)i

According to International Patent Classification (IPC) or to both national classification and IPC

**B. FIELDS SEARCHED**

Minimum documentation searched (classification system followed by classification symbols)

C08J 3/12(2006.01); B05B 7/06(2006.01); B29B 9/16(2006.01); B29C 44/50(2006.01); C08J 9/00(2006.01); C08J 9/16(2006.01); C08J 9/28(2006.01); C08L 23/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자(polymer), 폴리프로필렌(Polypropylene), 압출(extruding), 비활성기체(inert gas), 냉각(cooling)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0103751 A (LG HAUSYS, LTD.) 19 September 2018 (2018-09-19) See claims 1 and 12; and paragraphs [0007], [0027], [0029] and [0043]-[0044]. | 1-36 |
| Y | KR 10-2001-0022519 A (HUNTSMAN CORPORATION) 15 March 2001 (2001-03-15) See claims 1 and 12; pages 3-4; and figure 1. | 1-36 |
| A | KR 10-2015-0078004 A (TORAY CHEMICAL KOREA INC.) 08 July 2015 (2015-07-08) See claims 1-3. | 1-36 |
| A | JP 2000-052341 A (NIPPON PNEUMATIC MFG CO., LTD.) 22 February 2000 (2000-02-22) See claim 1. | 1-36 |
| A | JP 2006-273930 A (TEIJIN ENGINEERING LTD.) 12 October 2006 (2006-10-12) See claim 1. | 1-36 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 December 2020** | **21 December 2020** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2020/012291**

| Patent document cited in search report | | | Publication date (day/month/year) | Patent family member(s) | | | Publication date (day/month/year) |
|---|---|---|---|---|---|---|---|
| KR | 10-2018-0103751 | A | 19 September 2018 | EP | 3594268 | A1 | 15 January 2020 |
| | | | | EP | 3594269 | A1 | 15 January 2020 |
| | | | | EP | 3594270 | A1 | 15 January 2020 |
| | | | | EP | 3594271 | A1 | 15 January 2020 |
| | | | | JP | 2020-509144 | A | 26 March 2020 |
| | | | | JP | 2020-510109 | A | 02 April 2020 |
| | | | | JP | 2020-510115 | A | 02 April 2020 |
| | | | | JP | 2020-511568 | A | 16 April 2020 |
| | | | | KR | 10-2018-0103664 | A | 19 September 2018 |
| | | | | KR | 10-2018-0103665 | A | 19 September 2018 |
| | | | | KR | 10-2018-0103666 | A | 19 September 2018 |
| | | | | KR | 10-2018-0103667 | A | 19 September 2018 |
| | | | | KR | 10-2018-0103668 | A | 19 September 2018 |
| | | | | KR | 10-2018-0103669 | A | 19 September 2018 |
| | | | | KR | 10-2018-0103745 | A | 19 September 2018 |
| | | | | KR | 10-2018-0103746 | A | 19 September 2018 |
| | | | | KR | 10-2018-0103748 | A | 19 September 2018 |
| | | | | KR | 10-2018-0103750 | A | 19 September 2018 |
| | | | | KR | 10-2018-0103752 | A | 19 September 2018 |
| | | | | US | 2020-0032005 | A1 | 30 January 2020 |
| | | | | US | 2020-0032049 | A1 | 30 January 2020 |
| | | | | US | 2020-0071470 | A1 | 05 March 2020 |
| | | | | US | 2020-0316819 | A1 | 08 October 2020 |
| | | | | WO | 2018-164539 | A1 | 13 September 2018 |
| | | | | WO | 2018-164540 | A1 | 13 September 2018 |
| | | | | WO | 2018-164541 | A1 | 13 September 2018 |
| | | | | WO | 2018-164542 | A1 | 13 September 2018 |
| KR | 10-2001-0022519 | A | 15 March 2001 | AU | 2239999 | A | 14 February 2000 |
| | | | | AU | 8590498 | A | 22 February 1999 |
| | | | | BR | 9810778 | A | 19 September 2000 |
| | | | | BR | 9912681 | A | 09 October 2001 |
| | | | | CA | 2297102 | A1 | 11 February 1999 |
| | | | | CA | 2338464 | A1 | 03 February 2000 |
| | | | | CN | 1265689 | A | 06 September 2000 |
| | | | | CN | 1313876 | A | 19 September 2001 |
| | | | | EP | 1000115 | A1 | 17 May 2000 |
| | | | | EP | 1000115 | B1 | 14 November 2001 |
| | | | | EP | 1102808 | A1 | 30 May 2001 |
| | | | | ID | 24187 | A | 13 July 2000 |
| | | | | ID | 28908 | A | 12 July 2001 |
| | | | | JP | 2001-512165 | A | 21 August 2001 |
| | | | | JP | 2003-524667 | A | 19 August 2003 |
| | | | | KR | 10-2001-0071021 | A | 28 July 2001 |
| | | | | NO | 20000354 | L | 24 January 2000 |
| | | | | NO | 20010367 | L | 23 March 2001 |
| | | | | NZ | 502493 | A | 20 December 2002 |
| | | | | US | 5977195 | A | 02 November 1999 |
| | | | | US | 6093750 | A | 25 July 2000 |
| | | | | WO | 00-05296 | A1 | 03 February 2000 |
| | | | | WO | 99-06477 | A1 | 11 February 1999 |

Form PCT/ISA/210 (patent family annex) (July 2019)

## INTERNATIONAL SEARCH REPORT
### Information on patent family members

International application No.

**PCT/KR2020/012291**

| Patent document cited in search report | | | Publication date (day/month/year) | Patent family member(s) | Publication date (day/month/year) |
|---|---|---|---|---|---|
| KR | 10-2015-0078004 | A | 08 July 2015 | None | |
| JP | 2000-052341 | A | 22 February 2000 | None | |
| JP | 2006-273930 | A | 12 October 2006 | None | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190112897
- JP 2001288273 A
- JP 2000007789 A
- JP 2004269865 A